# EUROPEAN PATENT APPLICATION

(11) **EP 4 496 401 A1**
(43) Date of publication of application: **22.01.2025**
(21) Application number: 22931305.1
(22) Date of filing: 14.03.2022
(51) Int. Cl.: H04W 72/04, H04L 5/00, H04B 7/0413

(54) **METHOD AND APPARATUS FOR DETERMINING ASSOCIATION RELATIONSHIP OF UPLINK PTRS PORTS, MEDIUM, AND PRODUCT**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2022/080791
(87) International publication number: WO 2023/173265

(57) **Abstract**

The present disclosure relates to the field of communications. Disclosed are a method and apparatus for determining an association relationship of uplink PTRS ports, a medium, and a product. The method comprises: determining the association relationship between uplink PTRS ports and uplink DMRS ports on the basis of DCI, wherein the maximum number of the uplink DMRS ports allocated to the terminal is 8. The method is used for supporting related function implementation under the condition that the terminal uses at most eight transmitting antenna ports.

## Description

### TECHNICAL FIELD

The present disclosure relates to the field of communications, and more particularly to a method and an apparatus for determining an association of an uplink PTRS port, a medium, and a product.

### BACKGROUND

In a 5G New Radio (NR) system, a phase tracking reference signal (PTRS) is designed, and the PTRS is configured to estimate a common phase error (CPE).

In a process of uplink transmission, a user equipment (UE) can be configured with a plurality of antenna ports, and the UE supports sending of a demodulation reference signal (DMRS) for at most 4 antenna ports, and then one or two uplink DMRS ports associated with an uplink PTRS port are determined from the 4 uplink DMRS ports.

### SUMMARY

Embodiments of the present disclosure provide a method and an apparatus for determining an association of an uplink PTRS port, a medium, and a product. The technical solution is as follows.

According to an aspect of an embodiment of the present disclosure, a method for determining an association of an uplink PTRS port is provided. The method is performed by a terminal, and includes:
determine an association between an uplink PTRS port and an uplink DMRS port based on downlink control information;
in which a maximum number of uplink DMRS ports allocated to the terminal is 8, and a number of uplink PTRS ports includes 1 or 2.

According to another aspect of an embodiment of the present disclosure, a method for determining an association of an uplink PTRS port is provided. The method is performed by a network device, and includes:
sending downlink control information to a terminal, where the downlink control information is configured to indicate an association between an uplink PTRS port and an uplink DMRS port;
in which a maximum number of uplink DMRS ports allocated to the terminal is 8, and a number of uplink PTRS ports includes 1 or 2.

According to another aspect of an embodiment of the present disclosure, an apparatus for determining an association of an uplink PTRS port is provided. The apparatus includes:
a processing module configured to determine an association between an uplink PTRS port and an uplink DMRS port based on downlink control information;
in which a maximum number of uplink DMRS ports allocated to a terminal is 8, and a number of uplink PTRS ports includes 1 or 2.

According to another aspect of an embodiment of the present disclosure, an apparatus for determining an association of an uplink PTRS port is provided. The apparatus includes:
a sending module configured to send downlink control information to a terminal, in which the downlink control information is configured to indicate an association between an uplink PTRS port and an uplink DMRS port;
in which a maximum number of uplink DMRS ports allocated to a terminal is 8, and a number of uplink PTRS ports includes 1 or 2.

According to another aspect of an embodiment of the present disclosure, a terminal is provided, which includes:
a processor; and
a transceiver coupled to the processor; in which,
the processor is configured to load and execute executable instructions to implement the method for determining an association of an uplink PTRS port as described in respective aspects above.

According to another aspect of an embodiment of the present disclosure, a network device is provided, which includes:
a processor; and
a transceiver coupled to the processor; in which,
the processor is configured to load and execute executable instructions to implement the method for determining an association of an uplink PTRS port as described in respective aspects above.

According to another aspect of an embodiment of the present disclosure, there is provided a computer-readable storage medium, having at least one instruction, at least one piece of program, a code set or an instruction set stored thereon. When the at least one instruction, the at least one piece of program, the code set or the instruction set is loaded and executed by a processor, the method for determining an association of an uplink PTRS port as described in respective aspects above is implemented.

According to another aspect of an embodiment of the present disclosure, there is provided a computer program product (or a computer program) including computer instructions stored in a computer-readable storage medium. A processor of a computer device reads the computer instructions from the computer-readable storage medium, and executes the computer instructions, causing the computer device to perform the method for determining an association of an uplink PTRS port as described in respective aspects above.

The technical solutions provided by embodiments of the present disclosure may include following advantageous effects.

In the above-mentioned method for determining an association of an uplink PTRS port, the terminal determines the association between the uplink PTRS port and the uplink DMRS port according to the downlink control information, and determines one or two uplink DMRS ports associated with the uplink PTRS port from at most 8 uplink DMRS ports. The method is used for supporting relevant function implementation when the terminal uses 8 transmitting antenna ports, for example, for supporting estimation of a common phase error when the terminal uses the 8 transmitting antenna ports.

It is to be understood that both the foregoing general description and the following detailed description are illustrative and explanatory only and are not restrictive of the present disclosure.

### BRIEF DESCRIPTION OF THE DRAWINGS

To more clearly illustrate the technical solutions in embodiments of the present disclosure, a brief introduction will be given below to the accompanying drawings required for description of embodiments. Obviously, the accompanying drawings in the following description are only some embodiments of the present disclosure, and for those skilled in the art, other drawings can be obtained according to these drawings without inventive work.
FIG 1 is a block diagram showing a communication system according to an exemplary embodiment.
FIG 2 is a flow chart showing a method for determining an association of an uplink PTRS port according to an exemplary embodiment.
FIG 3 is a flow chart showing a method for determining an association of an uplink PTRS port according to another exemplary embodiment.
FIG 4 is a flow chart showing a method for determining an association of an uplink PTRS port according to another exemplary embodiment.
FIG 5 is a flow chart showing a method for determining an association of an uplink PTRS port according to another exemplary embodiment.
FIG 6 is a flow chart showing a method for determining an association of an uplink PTRS port according to another exemplary embodiment.
FIG 7 is a flow chart showing a method for determining an association of an uplink PTRS port according to another exemplary embodiment.
FIG 8 is a flow chart showing a method for determining an association of an uplink PTRS port according to another exemplary embodiment.
FIG 9 is a flow chart showing a method for determining an association of an uplink PTRS port according to another exemplary embodiment.
FIG 10 is a block diagram showing an apparatus for determining an association of an uplink PTRS port according to an exemplary embodiment
FIG 11 is a block diagram showing an apparatus for determining an association of an uplink PTRS port according to another exemplary embodiment.
FIG 12 is a structural diagram showing a terminal according to an exemplary embodiment.
FIG 13 is a structural diagram showing a network device shown according to an exemplary embodiment

### DETAILED DESCRIPTION

Exemplary embodiments will be described in detail herein, examples of which are illustrated in the accompanying drawings. When the following description refers to the accompanying drawings, the same or similar elements are denoted by the same numerals in different accompanying drawings, unless otherwise indicated. The implementations described in the following exemplary embodiments do not represent all implementations consistent with the disclosure. Instead, they are merely examples of apparatuses and methods consistent with some aspects of the disclosure as detailed in the appended claims.

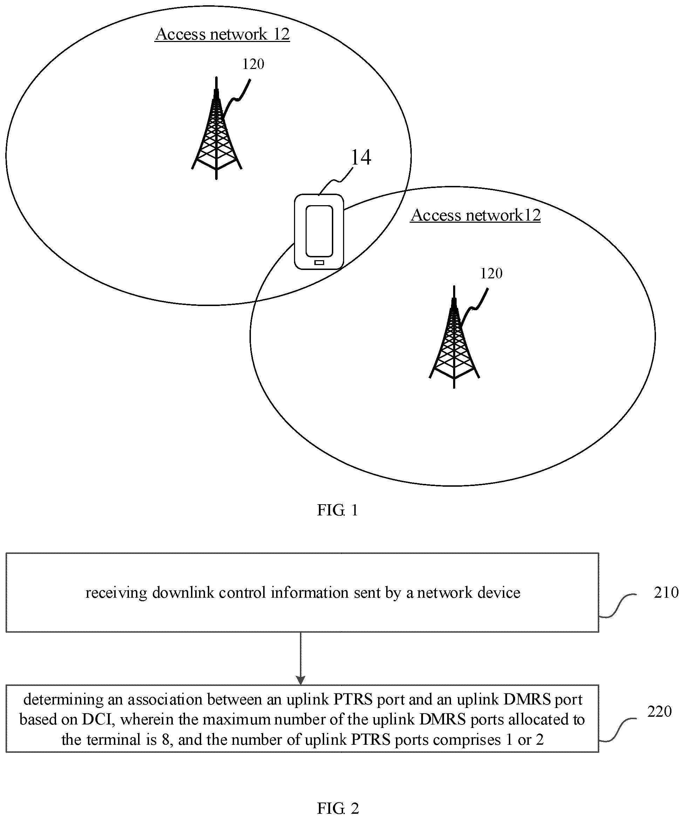

FIG 1 illustrates a block diagram of a communication system provided by an exemplary embodiment of the present disclosure. The communication system may include an access network 12 and a user terminal 14.

The access network 12 includes several network devices 120. The network device (also referred to as a network equipment) 120 may be a base station. The base station is a device deployed in an access network to provide a wireless communication function for the user terminal (referred to as "terminal") 14. The base station may include various forms of a macro base station, a micro base station, a relay station, an access point, a transmission and reception points (TRP), etc. Names of an apparatus with a base station function may be different in systems with different wireless access technologies. For example, in a long term evolution (LTE) system, the device is called as eNodeB or eNB; in a 5G new radio (NR) system, the device is called gNodeB or gNB. With evolution of communication technologies, the description of "base station" may be changed. To facilitate the description of embodiments of the present disclosure, apparatuses for providing the wireless communication function for the user terminal 14 as described above are collectively referred to as the network device.

The user terminal 14 may include various handheld devices, vehicle-mounted devices, wearable devices, computing devices with a wireless communication function, or other processing devices connected to a wireless modem, as well as various forms of user equipments, mobile stations (MSs), terminal devices, etc. For the convenience of description, the devices as described above are collectively referred to as the terminal device. The network device 120 and the user terminal 12 communicate with each other through a certain air radio technology, such as a Uu interface.

Illustratively, there are two communication scenarios between the network device 120 and the user terminal 14: an uplink communication scenario and a downlink communication scenario. The uplink communication refers to send a signal to the network device 120; and the downlink communication refers to send a signal to the user equipment 14.

The technical solutions of embodiments of the present disclosure can be applied to various communication systems, for example, a Global System of Mobile Communication (GSM) system, a Code Division Multiple Access (CDMA) system, a Wideband Code Division Multiple Access (WCDMA) system and a General Packet Radio Service (GPRS), a Long Term Evolution (LTE) system, an LTE Frequency Division Duplex (FDD) system, an LTE Time Division Duplex (TDD) system, an Advanced Long Term Evolution (LTE-A) system, a New Radio (NR) system, an evolution system of the NR system, an LTE-based access to Unlicensed spectrum (LTE-U) system, a NR-U system, a Universal Mobile Telecommunication System (UMTS), a Worldwide Interoperability for Microwave Access (WiMAX) communication system, a Wireless Local Area Networks (WLAN), a Wireless Fidelity (WiFi), a next generation communication system or other communication system, etc.

In general, a conventional communication system supports a limited number of connections and is easy to implement. However, with development of communication technology, a mobile communication system will support not only the conventional communication but also, for example, Device to Device (D2D) communication, Machine to Machine (M2M) communication, Machine Type Communication (MTC) communication, Vehicle to Vehicle (V2V) communication and a Vehicle to Everything (V2X) system, etc. Embodiments of the present disclosure may also be applied to these communication systems.

FIG 2 is a flow chart showing a method for determining an association of an uplink PTRS port provided by an exemplary embodiment of the present disclosure. The method is applied to a terminal of the communication system shown in FIG 1. The method includes following steps.

At step 210, downlink control information sent by a network device is received.

The terminal receives the downlink control information (DCI) sent by the network device on a physical downlink control channel (PDCCH). The DCI includes a first information field, and the first information field is configured to indicate an association between an uplink PTRS port and an uplink DMRS port corresponding to a sounding reference signal (SRS) resource. A maximum number of uplink DMRS ports is 8.

Illustratively, in measuring uplink channel quality, the terminal may map the SRS resource on a physical resource (PR) of an uplink channel, then allocate use of the SRS resource for the uplink DMRS port, and associate the uplink PTRS port on the uplink DMRS port. The physical resource refers to continuous carrier resources in a frequency domain, and one physical resource block (PRB) corresponds to 12 continuous carriers in the frequency domain and one slot in a time domain. The uplink channel includes at least one of a physical uplink control channel (PUCCH) and a physical uplink shared channel (PUSCH).

At step 220, an association between an uplink PTRS port and an uplink DMRS port is determined based on the DCI. The maximum number of the uplink DMRS ports allocated to the terminal is 8, and the number of the uplink PTRS ports includes 1 or 2.
(I) The number of the uplink PTRS ports may be configured for the terminal by the network device as follows.
   (1) The DCI is also configured to indicate the number of the uplink PTRS ports, i.e., the network device configures the number of the uplink PTRS ports for the terminal by the DCI.
      Illustratively, after receiving the DCI sent by the network device in a media access control (MAC) layer, the terminal determines an uplink DMRS port associated with the uplink PTRS port in response to the number of the uplink PTRS ports being 1 based on an indication of the DCI; or, determines uplink DMRS ports associated with the uplink PTRS ports in response to the number of the uplink PTRS ports being 2 based on the indication of the DCI.
   (2) The number of uplink PTRS ports is configured by higher layer signaling, and a number of uplink PT-RS ports sent by the terminal is consistent with the configured number of uplink PT-RS ports. For example, the number of uplink PTRS ports is configured for the terminal by the network device through radio resource control (RRC) signaling, and the terminal sends a PTRS through all of the uplink PTRS ports configured by the network device.
      Illustratively, the terminal determines that the number of uplink PTRS ports is 1 based on an indication of the RRC signaling, and determines the uplink DMRS port associated with the uplink PTRS port when the number of uplink PTRS ports is 1 based on the indication of the DCI. Or, the terminal determines that the number of uplink PTRS ports is 2 based on the indication of the RRC signaling, and determines the uplink DMRS ports associated with the uplink PTRS ports when the number of uplink PTRS ports is 2 based on the indication of the DCI.
(II) The number of the uplink PTRS ports may be determined by the terminal.
   For example, in a scenario of codebook (CB)-based PUSCH transmission, the number of the uplink PTRS ports is determined in following manners.
   (1) In a scenario of CB-based PUSCH transmission with a full coherent transmission mode, the terminal determines that the number of uplink PTRS ports is 1 if a sounding reference signal resource indicator (SRI) only indicates one SRS resource.
   (2) In a scenario of CB-based PUSCH transmission with a partial coherent or non-coherent transmission mode, the terminal determines that the number of uplink PTRS ports is 1 if a number of layers indicated by a transmitted precoding matrix indicator (TPMI) is 1 or 2.
   (3) In a scenario of the CB-based PUSCH transmission with a full coherent transmission mode, the terminal determines that the number of uplink PTRS ports is 2 if the SRI indicates two SRS resources.
   (4) In a scenario of the CB-based PUSCH transmission using a partial coherent or incoherent transmission mode, the terminal determines that the number of uplink PTRS ports is 2 if the number of layers indicated by the TPMI is two or more layers or three or more layers.

For another example, in a scenario of non-codebook (NCB)-based PUSCH transmission, the number of the uplink PTRS ports is determined as follows.
(1) In a scenario of NCB-based PUSCH transmission, the terminal determines that the number of uplink PTRS ports is 1 or 2 according to the SRI.

Illustratively, in a scenario of the NCB-based PUSCH transmission, the terminal determines that the number of uplink PTRS ports is 2 if SRI(s) in the DCI indicates a plurality of (i.e., two or more) beam transmissions.

Illustratively, in a scenario of the NCB-based PUSCH transmission, the terminal determines that the number of uplink PTRS ports is 1 if the SRI indicates one SRS resource.

Illustratively, in a scenario of the NCB-based PUSCH transmission, the terminal determines that the number of uplink PTRS ports is 1 if the SRI indicates the plurality of SRS resources, and indexes of a plurality of PTRS ports included in the plurality of SRS resources are the same.

Illustratively, in a scenario of the NCB-based PUSCH transmission, the terminal determines that the number of uplink PTRS ports is 2 if the SRI indicates the plurality of SRS resources and the indexes of the plurality of PTRS ports included in the plurality of SRS resources are different.

(2) In a scenario of the NCB-based PUSCH transmission, the terminal determines that the number of uplink PTRS ports is 2 if the number of transmission layers indicated by the TRI is two or more.

The number of uplink DMRS ports may be 2, or 4, or 8. Illustratively, in response to the number of uplink PTRS ports being 1, the terminal determines that there is an association between one uplink DMRS port in the 8 uplink DMRS ports and the uplink PTRS port based on the indication of the downlink control information. That is, the uplink PTRS port is associated to one uplink DMRS port in the 8 uplink DMRS ports based on the indication of the downlink control information.

Illustratively, in response to the number of uplink PTRS ports being 2, the terminal determines, based on the indication of downlink control information, that there is an association between a first uplink DMRS port in the 8 uplink DMRS ports and a first uplink PTRS port and there is an association between a second uplink DMRS port in the 8 uplink DMRS ports and a second uplink PTRS port. That is, based on the indication of the downlink control information, the first uplink PTRS port is associated to the first uplink DMRS port in the 8 uplink DMRS ports and the second uplink PTRS port is associated to the second uplink DMRS port in the 8 uplink DMRS ports. The second uplink PTRS port is another uplink PTRS port excluding the first uplink PTRS port in 2 uplink PTRS ports, and the second uplink DMRS port is an uplink DMRS port excluding the first uplink DMRS port in the 8 uplink DMRS ports.

Illustratively, the at most 8 uplink DMRS ports (i.e., antenna ports corresponding to DMRSs) can be antenna ports mapped to the same antenna panel or different antenna panels. That is, the at most 8 uplink DMRS ports are antenna ports mapped onto M antenna panels, where M is a positive integer less than or equal to 8. For example, 4 uplink DMRS ports of the 8 uplink DMRS ports are mapped onto a first antenna panel and remaining 4 uplink DMRS ports of the 8 uplink DMRS ports are mapped onto a second antenna panel.

Illustratively, in a case of CB-based uplink channel quality sounding, the terminal determines the association between the uplink PTRS port and the uplink DMRS port based on the downlink control information; alternatively, in a case of NCB-based uplink channel quality sounding, the terminal determines the association between the uplink PTRS port and the uplink DMRS port based on the downlink control information.

Alternatively, application scenarios of embodiments of the present disclosure may include at least one of:
a scenario of CB-based PUSCH transmission;
a scenario of NCB-based PUSCH transmission; and
a scenario of scheduling-free configured grant (CG) PUSCH transmission.

That is, in a scenario of the CB-based PUSCH transmission, the terminal determines the association between the uplink PTRS port and the uplink DMRS port based on the downlink control information. Or, in a scenario of the NCB-based PUSCH transmission, the terminal determines the association between the uplink PTRS port and the uplink DMRS port based on the downlink control information. Or, in a scenario of the scheduling-free CG PUSCH transmission, the terminal determines the association between the uplink PTRS port and the uplink DMRS port based on the downlink control information.

In summary, in the method for determining an association of an uplink PTRS port provided by an embodiment, the terminal determines the association between the uplink PTRS port and the uplink DMRS port according to the downlink control information, and determines one or two uplink DMRS ports associated with the uplink PTRS port or ports from the at most 8 uplink DMRS ports. The method is used for supporting estimation of a common phase error in uplink transmission when the terminal uses at most 8 sending antenna ports, for example, for supporting the terminal using the 8 transmitting antenna ports to detect the common phase error in the scenario of CB-based uplink transmission; or, for supporting the terminal using the 8 transmitting antenna ports to detect the common phase error (CPE) in the scenario of NCB-based uplink transmission.

In a scenario of estimation of the common phase error upon uplink transmission, there are two following cases.

Firstly, there is one uplink PTRS port.

Second, there are two uplink PTRS ports.

In the above two cases, different methods are respectively used to realize determination of the association between the uplink PTRS port and the uplink DMRS port, as shown below.

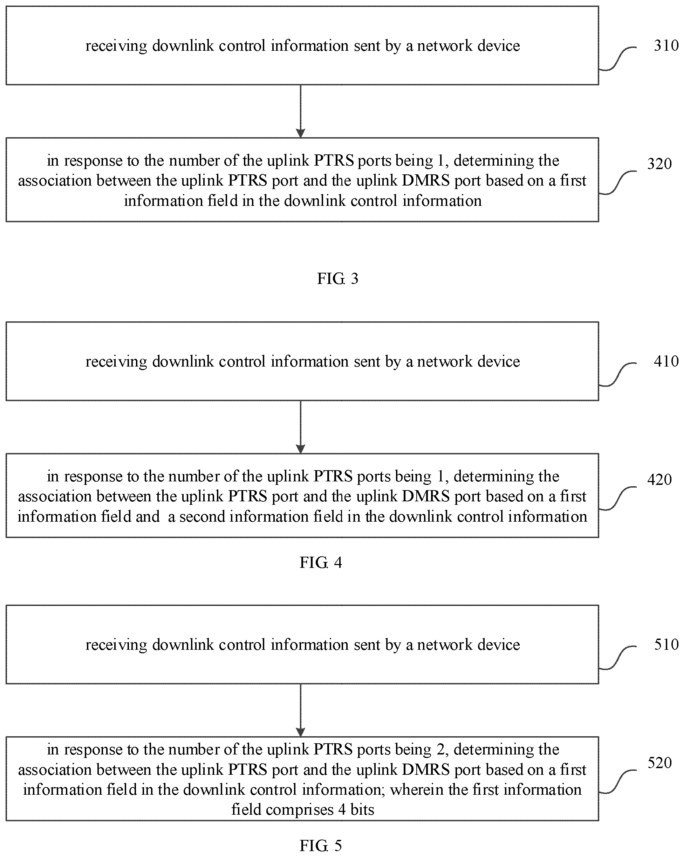

For a first case, the step 220 in FIG 2 may be implemented by a step 320, as shown in FIG 3. The step 320 is provided as follows.

At step 320, in response to the number of the uplink PTRS ports being 1, the association between the uplink PTRS port and the uplink DMRS port is determined based on a first information field in the downlink control information.

The downlink control information includes a first information field, and the first information field is configured to indicate one uplink DMRS port associated with the uplink PTRS port in the at most 8 uplink DMRS ports. For example, the first information field is DCI0_1/0_2.

Alternatively, the first information field includes 3 bits, and a value of the 3 bits is configured to indicate one uplink DMRS port associated with PTRS transmission in the at most 8 (including 8) uplink DMRS ports. Illustratively, the value of the 3 bits is configured to indicate one uplink DMRS port associated with the PTRS transmission of the 8 uplink DMRS ports. The bits of the information field are represented in binary in an embodiment of the present disclosure. As shown in Table 1, port numbers of the 8 uplink DMRS ports are 0-7, then the port numbers of the 8 uplink DMRS ports can be represented by the value of three bits. The port numbers of the uplink DMRS ports are also Indexes of the uplink DMRS ports. For example, the 3 bits on the first information field are "000", then the terminal determines that there is an association between the uplink PTRS port and an uplink DMRS port 0; or the 3 bits on the first information field are "101", then the terminal determines that there is an association between the uplink PTRS port and an uplink DMRS port 5; or, the 3 bits on the first information field are "111", then the terminal determines that there is an association between the uplink PTRS port and an uplink DMRS port 7.

**Table 1**

| Value of 3 bits | Represented in binary | DMRS port |
|---|---|---|
| 0 | 000 | DMRS port 0 (i.e., first DMRS port) |
| 1 | 001 | DMRS port 1 (i.e., second DMRS port) |
| 2 | 010 | DMRS port 2 (i.e., third DMRS port) |
| 3 | 011 | DMRS port 3 (i.e., fourth DMRS port) |
| 4 | 100 | DMRS port 4 (i.e., fifth DMRS port) |
| 5 | 101 | DMRS port 5 (i.e., sixth DMRS port) |
| 6 | 110 | DMRS port 6 (i.e., seventh DMRS port) |
| 7 | 111 | DMRS port 7 (i.e., eighth DMRS port) |

Alternatively, the at most 8 uplink DMRS ports are divided into two DMRS port groups. The first information field includes 3 bits, 1 bit of the 3 bits is configured to indicate a first DMRS port group of the two DMRS port groups, and remaining 2 bits of the 3 bits are configured to indicate one uplink DMRS port in the first DMRS port group.

Illustratively, the 8 uplink DMRS ports are divided into two DMRS port groups, and each of the DMRS port group includes 4 uplink DMRS ports; the first information field includes 3 bits, the 1 bit of the 3 bits is configured to indicate the first DMRS port group of the two DMRS port groups, and the remaining 2 bits of the 3 bits are configured to indicate one uplink DMRS port in 4 uplink DMRS ports of the first DMRS port group. That is, the 1 bit of the 3 bits is configured to indicate one DMRS port group of the two DMRS port groups, and the remaining 2 bits of the 3 bits are configured to indicate one uplink DMRS port in the 4 uplink DMRS ports of the DMRS port group indicated by the 1 bit.

Alternatively, the 1 bit is a most significant bit of the 3 bits (i.e., the first bit in the 3 bits); or, the 1 bit is a least significant bit of the 3 bits (i.e., the third bit in the 3 bits).

Illustratively, the first bit in the 3 bits is configured to indicate the first DMRS port group in the two DMRS port groups, and a second bit and a third bit of the 3 bits are configured to indicate one uplink DMRS port in the 4 uplink DMRS ports of the first DMRS port group. Alternatively, the third bit (i.e., the last bit) of the 3 bits is used to indicate the first DMRS port group of the two DMRS port groups, and the first bit and second bit of the 3 bits are used to indicate one uplink DMRS port in the 4 uplink DMRS ports of the first DMRS port group.

Illustratively, the remaining 2 bits of the 3 bits are used to indicate an order of one DMRS associated with the uplink PTRS port in the 4 uplink DMRS ports of the first DMRS port group. For example, the first DMRS port group includes uplink DMRS ports 0-3, and the second DMRS port group includes uplink DMRS ports 4-7. In the 3 bits, a first bit "0" is configured to indicate the first DMRS port group, and a first bit "1" is configured to indicate the second DMRS port group; second and third bits "00" are used to indicate a first uplink DMRS port in the DMRS port group, second and third bits "01" are used to indicate a second uplink DMRS port in the DMRS port group, second and third bits "10" are used to indicate a third uplink DMRS port in the DMRS port group, and second and third bits "11" are used to indicate a fourth uplink DMRS port in the DMRS port group. If the 3 bits are "000", the terminal determines that the uplink DMRS port 0 in the first DMRS port group is associated with the uplink PTRS port; if the 3 bits are "110", the terminal determines that the uplink DMRS port 6 in the second DMRS port group is associated with the uplink PTRS port.

Illustratively, the two DMRS port groups are obtained by dividing the at most 8 uplink DMRS ports based on a pre-defined manner of a protocol. For example, if the two DMRS port groups are obtained by dividing the 8 uplink DMRS ports based on the manner defined by the protocol, the protocol may define that one DMRS port group includes DMRS ports 0-3, and the other DMRS port group includes DMRS ports 4-7. Or, the two DMRS port groups are obtained by a network device allocating the at most 8 uplink DMRS ports. For example, if the two DMRS port group are obtained by the network device allocating the 8 uplink DMRS ports, the terminal determines, based on allocation of the network device, that one DMRS port group includes DMRS ports 0-3, and the other DMRS port group includes DMRS ports 4-7.

Alternatively, the first information field is a PTRS-DMRS association field.

In summary, the method for determining an association of an uplink PTRS port provided by the present embodiment defines the 3 bits on one information field in the DCI to indicate the association between one uplink PTRS port and one uplink DMRS port in the at most 8 uplink DMRS ports. The method is used for supporting estimation of a common phase error in uplink transmission when the terminal uses 8 sending antenna ports, for example, for supporting the terminal to use the 8 transmitting antenna ports to detect the common phase error in a scenario of CB-based uplink transmission, or, is used for supporting the terminal to use the 8 transmitting antenna ports to detect the common phase error in a scenario of NCB-based uplink transmission.

For the first case, the step 220 in FIG 2 may further be implemented by a step 420, as shown in FIG 4. The step 420 is provided as follows.

At step 420, in response to the number of the uplink PTRS ports being 1, the association between the uplink PTRS port and the uplink DMRS port is determined based on a first information field and a second information field in the downlink control information.

Illustratively, the downlink control information includes at least two information fields including a first information field and a second information field. The second information field is an information field apart from the first information field in the downlink control information, i.e., the second information field is an information field apart from the first information field in the at least two information fields in the downlink control information. For example, the first information field and the second information field are adjacent information fields, or the first information field and the second information field are separated by at least one information field.

Alternatively, at most 8 uplink DMRS ports are divided into two DMRS port groups including a first DMRS port group and a second DMRS port group. The second information field is configured to indicate the first DMRS port group in the two DMRS port groups, and the first information field is configured to indicate one uplink DMRS port in the first DMRS port group. That is, the second information field is used to indicate one DMRS port group of the two DMRS port groups, and the first information field is used to indicate one uplink DMRS port of the DMRS port group indicated by the second information field. Illustratively, the 8 uplink DMRS ports are divided into two DMRS port groups, and each DMRS port group includes 4 uplink DMRS ports; the second information field is configured to indicate the first DMRS port group of the two DMRS port groups, and the first information field is configured to indicate one uplink DMRS port in 4 uplink DMRS ports of the first DMRS port group.

The first information field includes 2 bits, and the second information field includes 1 bit. Illustratively, 2 bits in the first information field are used to indicate an order of one uplink DMRS associated with the uplink PTRS port in the 4 uplink DMRS ports of the first DMRS port group. For example, the first DMRS port group includes uplink DMRS ports 0-3, and the second DMRS port group includes uplink DMRS ports 4-7. On the second information field, "0" of 1 bit is configured to indicate the first DMRS port group, and "1" of 1 bit is configured to indicate the second DMRS port group. On the first information field, "00" of 2 bits is used to indicate a first uplink DMRS port in the DMRS port group, "01" of 2 bits is used to indicate a second uplink DMRS port in the DMRS port group, "10" of 2 bits is used to indicate a third uplink DMRS port in the DMRS port group, and "11" of 2 bits is used to indicate a fourth uplink DMRS port in the DMRS port group. If the 1 bit on the second information field is "0", and the 2 bits on the first information field are "11", then the terminal determines that the uplink DMRS port 3 in the first DMRS port group is associated with the uplink PTRS port. If the 1 bit in the second information field is "1" and the 2 bits in the first information field is "01", the terminal determines that the uplink DMRS port 5 in the second DMRS port group is associated with the uplink PTRS port.

Alternatively, the first information field is a PTRS-DMRS association field.

Alternatively, the 1 bit in the second information field is a reserved bit (or reserved codepoint) in the second information field.

In summary, the method for determining an association of an uplink PTRS port provided by the present embodiment defines two information fields on the DCI to indicate the association between one uplink PTRS port and one uplink DMRS port of the at most 8 uplink DMRS ports. The method is used for supporting estimation of a common phase error in uplink transmission when the terminal uses 8 sending antenna ports, for example, for supporting the terminal to use the 8 sending antenna ports to detect a common phase error in a scenario of CB-based uplink transmission, or, for supporting the terminal to use the 8 sending antenna ports to detect the common phase error in a scenario of NCB-based uplink transmission.

For the second case, the step 220 in FIG 2 may be implemented by a step 520, as shown in FIG 5. The step 520 is provided as follows.

At step 520, in response to the number of uplink PTRS ports being 2, determine the association between the uplink PTRS port and the uplink DMRS port based on a first information field in the downlink control information; where the first information field includes 4 bits.

The downlink control information includes a 4-bit first information field. The first information field is configured to indicate a first uplink DMRS port associated with a first uplink PTRS port and a second uplink DMRS port associated with a second uplink PTRS port in at most 8 uplink DMRS ports.

Alternatively, the at most 8 uplink DMRS ports are divided into two DMRS port groups including a first DMRS port group and a second DMRS port group. Illustratively, 8 uplink DMRS ports are divided into two DMRS port groups, and each of the DMRS port group may include 4 uplink DMRS ports. A value of 2 bits of most significant byte (MSB) in the 4 bits is configured to indicate one uplink DMRS port (i.e., a first uplink DMRS port) associated with the first uplink PTRS port in the first DMRS port group, and a value of 2 bits of least significant byte (LSB) in the 4 bits is configured to indicate one uplink DMRS port (i.e., a second uplink DMRS port) associated with the second uplink PTRS port in the second DMRS port group. The second DMRS port group is one DMRS port group of the two DMRS port groups excluding the first DMRS port group.

Illustratively, a value of first and second bits (i.e., 2 bits of the MSB) in the 4 bits is configured to indicate one uplink DMRS port associated with the first uplink PTRS port in the first DMRS port group, and a value of third and fourth bits (i.e., 2 bits of the LSB) in the 4 bits is configured to indicate one uplink DMRS port associated with the second uplink PTRS port in the second DMRS port group. Or, the value of the third and fourth bits of the 4 bits is configured to indicate one uplink DMRS port associated with the first uplink PTRS port in the first DMRS port group, and the value of the first and second bits of the 4 bits is configured to indicate one uplink DMRS port associated with the second uplink PTRS port in the second DMRS port group.

Illustratively, the value of every 2 bits is used to indicate an order of one uplink DMRS port associated with the uplink PTRS port in 4 uplink DMRS ports of a DMRS port group. For example, the value of 2 bits of MSB is used to indicate an order of the first uplink DMRS port associated with the first uplink PTRS port in 4 uplink DMRS ports of the first DMRS port group, and the value of 2 bits of LSB is used to indicate an order of the second uplink DMRS port associated with the second uplink PTRS port in 4 uplink DMRS ports of the second DMRS port group. For example, as shown in Table 2, the 4 uplink DMRS ports in the first DMRS port group are successively ordered as an uplink DMRS port 0, an uplink DMRS port 2, an uplink DMRS port 4 and an uplink DMRS port 6, and the 4 uplink DMRS ports in the second DMRS port group are successively ordered as an uplink DMRS port 1, an uplink DMRS port 3, an uplink DMRS port 5 and an uplink DMRS port 7. If first 2 bits are "01" and last 2 bits are "01", the terminal determines that the uplink DMRS port 2 is associated with the first uplink PTRS port (i.e., an uplink PTRS port 0), and the uplink DMRS port 3 is associated with the second uplink PTRS port (i.e., an uplink PTRS port 1). If the first 2 bits are "00" and the last 2 bits are "10", the terminal determines that the uplink DMRS port 0 is associated with the first uplink PTRS port and the uplink DMRS port 5 is associated with the second uplink PTRS port.

**Table 2**

| Value of MSB | Uplink DMRS port associated with uplink PTRS port 0 | Value of LSB | Uplink DMRS port associated with uplink PTRS port 1 | Represented in binary |
|---|---|---|---|---|
| 0 | Uplink DMRS port 0 (i.e., first uplink DMRS port) | 0 | Uplink DMRS port 1 (i.e., first uplink DMRS port) | 00 |
| 1 | Uplink DMRS port 2 (i.e., second uplink DMRS port) | 1 | Uplink DMRS port 3 (i.e., second uplink DMRS port) | 01 |
| 2 | Uplink DMRS port 4 (i.e., third uplink DMRS port) | 2 | Uplink DMRS port 5 (i.e., third uplink DMRS port) | 10 |
| 3 | Uplink DMRS port 6 (i.e., fourth uplink DMRS port) | 3 | Uplink DMRS port 7 (i.e., fourth uplink DMRS port) | 11 |

Alternatively, the first information field is a PTRS-DMRS association field.

Alternatively, the first uplink PTRS port is an uplink PTRS port corresponding to an antenna panel with a largest number of layers mapped in antenna panels corresponding to the two uplink PTRS ports.

In summary, the method for determining an association of an uplink PTRS port provided by the present embodiment defines 4 bits on one information field in the DCI to indicate the association between two uplink PTRS ports and two uplink DMRS ports of the at most 8 uplink DMRS ports. The method is used for supporting estimation of a common phase error in uplink transmission when the terminal uses the at most 8 sending antenna ports, for example, for supporting the terminal to use the 8 sending antenna ports to detect a common phase error in a scenario of CB-based uplink transmission, or, for supporting the terminal to use the 8 sending antenna ports to detect a common phase error in a scenario of NCB-based uplink transmission.

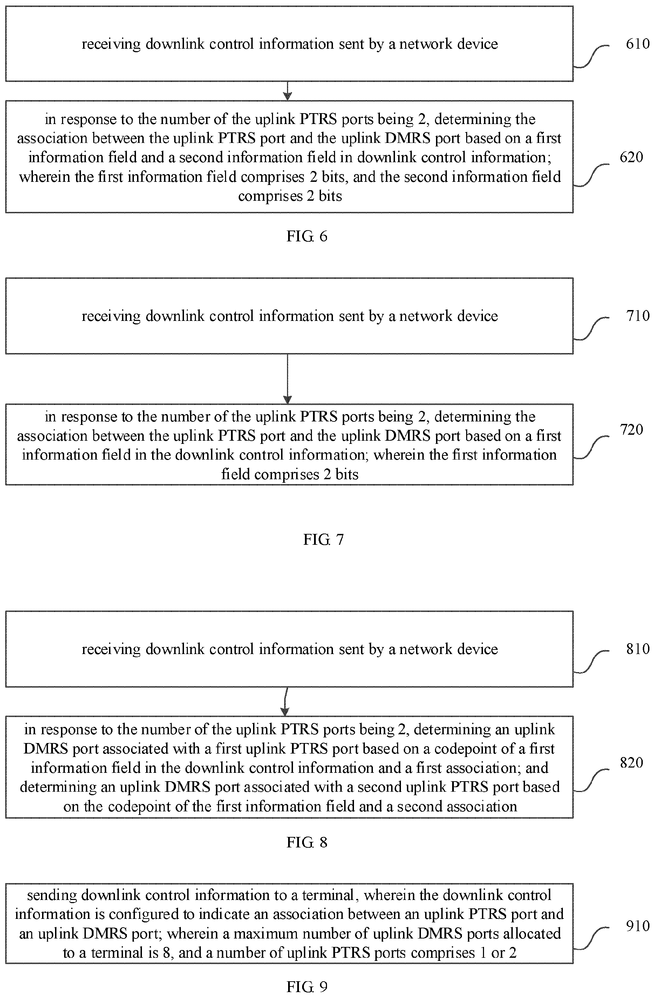

For the second case, the step 220 in FIG 2 may further be implemented by a step 620, as shown in FIG 6. The step 620 may be provided as follows.

At step 620, in response to the number of uplink PTRS ports being 2, the association between the uplink PTRS port and the uplink DMRS port is determined based on a first information field and a second information field in the downlink control information; where the first information field includes 2 bits, and the second information field includes 2 bits.

Illustratively, the downlink control information includes at least two information fields including a first information field and a second information field. The second information field is an information field apart from the first information field in the downlink control information, i.e., the second information field is an information field apart from the first information field in the at least two information fields in the downlink control information. For example, the first information field and the second information field are adjacent information fields, or the first information field and the second information field are separated by at least one information field.

Alternatively, at most 8 uplink DMRS ports are divided into two DMRS port groups including a first DMRS port group and a second DMRS port group. Illustratively, 8 uplink DMRS ports are divided into two DMRS port groups, and each of the DMRS port groups includes 4 uplink DMRS ports. The first information field is configured to indicate a first uplink DMRS port associated with a first uplink PTRS port in the first DMRS port group, and the second information field is configured to indicate a second uplink DMRS port associated with a second uplink PTRS port in the second DMRS port group. The second DMRS port group is one DMRS port group in the two DMRS port groups excluding the first DMRS port group.

Illustratively, in a case that each DMRS port group includes 4 uplink DMRS ports, a value of 2 bits in the first information field is configured to indicate an order of the first uplink DMRS ports associated with the first uplink PTRS ports in the 4 uplink DMRS ports of the first DMRS port group, and a value of 2 bits in the second information field is used to indicate an order of the second uplink DMRS port associated with the second uplink PTRS port in the 4 uplink DMRS ports of the second DMRS port group.

For example, the 4 uplink DMRS ports in the first DMRS port group are ordered as an uplink DMRS port 0, an uplink DMRS port 1, an uplink DMRS port 2 and an uplink DMRS port 3 successively, and the 4 uplink DMRS ports in the second DMRS port group are order as an uplink DMRS port 4, an uplink DMRS port 5, an uplink DMRS port 6 and an uplink DMRS port 7 successively. If two bits in the first information field are "11", and two bits in the second information field are "11", then the terminal determines that the uplink DMRS port 3 is associated with the first uplink PTRS port, and the uplink DMRS port 7 is associated with the second uplink PTRS port. If the two bits in the first information field are "00" and the two bits in the second information field are "00", the terminal determines that the uplink DMRS port 0 is associated with the first uplink PTRS port and the uplink DMRS port 4 is associated with the second uplink PTRS port.

For another example, the 4 uplink DMRS ports in the first DMRS port group are ordered as an uplink DMRS port 7, an uplink DMRS port 6, an uplink DMRS port 5 and an uplink DMRS port 4 successively, and the 4 uplink DMRS ports in the second DMRS port group are ordered as an uplink DMRS port 3, an uplink DMRS port 2, an uplink DMRS port 1 and an uplink DMRS port 0 successively. If two bits in the first information field are "00", and two bits in the second information field are "11", then the terminal determines that the uplink DMRS port 7 is associated with the first uplink PTRS port, and the uplink DMRS port 0 is associated with the second uplink PTRS port. If the two bits in the first information field are "01" and the two bits in the second information field are "10", the terminal determines that the uplink DMRS port 6 is associated with the first uplink PTRS port and the uplink DMRS port 1 is associated with the second uplink PTRS port.

Alternatively, the first information field is a PTRS-DMRS association field.

Alternatively, the 2 bits in the second information field are reserved bits in the second information field.

Alternatively, the first uplink PTRS port is an uplink PTRS port corresponding to an antenna panel with a largest number of layers mapped in antenna panels corresponding to the two uplink PTRS ports.

In summary, the method for determining an association of an uplink PTRS port provided in the present embodiment defines two information fields on the DCI, and 2 bits on each information field are configured to indicate the association between one uplink PTRS port and one uplink DMRS port in one DMRS port group, where the two DMRS port groups are obtained by dividing up the at most 8 uplink DMRS ports, and the two DMRS port groups are in a one-to-one correspondence with the two uplink PTRS ports. The method is used for supporting estimation of a common phase error in uplink transmission when the terminal uses the at most 8 sending antenna ports, for example, for supporting the terminal to use the 8 sending antenna ports to detect a common phase error in a scenario of CB-based uplink transmission, or, for supporting the terminal to use the 8 v antenna ports to detect a common phase error in a scenario of NCB-based uplink transmission.

For the second case, the step 220 in FIG 2 may further be implemented by a step 720, as shown in FIG 7. The step may be provided as follows.

At step 720, in response to the number of uplink PTRS ports being 2, the association between the uplink PTRS port and the uplink DMRS port is determined based on a first information field in downlink control information; where the first information field includes 2 bits.

Alternatively, at most 8 uplink DMRS ports are divided into two DMRS port groups including a first DMRS port group and a second DMRS port group. Illustratively, 8 uplink DMRS ports are divided into two DMRS port groups, and each of the DMRS port groups includes 4 uplink DMRS ports.

Alternatively, a value of 2 bits is configured to indicate an uplink DMRS port associated with a first uplink PTRS port in a first DMRS port group, then, the second uplink PTRS port can be determined by the terminal based on a default rule, and an uplink DMRS port associated with the second uplink PTRS port includes that:
the uplink DMRS port associated with the second uplink PTRS port is an uplink DMRS port corresponding to a maximum port number in the second DMRS port group;
or, the uplink DMRS port associated with the second uplink PTRS port is an uplink DMRS port corresponding to a minimum port number in the second DMRS port group;
or, the uplink DMRS port associated with the second uplink PTRS port is any one uplink DMRS port in the second DMRS port group;
or, the uplink DMRS port associated with the second uplink PTRS port is a fixed uplink DMRS port in the second DMRS port group;
or, in response to the uplink DMRS port associated with the first uplink PTRS port being a G^{th} uplink DMRS port in the first DMRS port group, the uplink DMRS port associated with the second uplink PTRS port is an H^{th} uplink DMRS port in the second DMRS port group, where H is a remainder of a sum of G and 2 divided by P, P is a minimum number of ports corresponding to the two DMRS port groups, and values of G, H and P are all positive integers not greater than 4.

Alternatively, a value of 2 bits is configured to indicate an uplink DMRS port associated with a second uplink PTRS port in a second DMRS port group, then, the first uplink PTRS port can be determined by the terminal based on a default rule, and an uplink DMRS port associated with the first uplink PTRS port includes that:
the uplink DMRS port associated with the first uplink PTRS port is an uplink DMRS port corresponding to a maximum port number in the first DMRS port group;
or, the uplink DMRS port associated with the first uplink PTRS port is an uplink DMRS port corresponding to a minimum port number in the first DMRS port group;
or, the uplink DMRS port associated with the first uplink PTRS port is any one uplink DMRS port in the first DMRS port group;
or, the uplink DMRS port associated with the first uplink PTRS port is a fixed uplink DMRS port in the first DMRS port group;
or, in response to the uplink DMRS port associated with the second uplink PTRS port being a G^{th} uplink DMRS port in the second DMRS port group, the uplink DMRS port associated with the first uplink PTRS port is an H^{th} uplink DMRS port in the first DMRS port group, where H is a remainder of a sum of G and 2 divided by P, P is a minimum number of ports corresponding to the two DMRS port groups, and values of G, H and P are all positive integers not greater than 4.

Illustratively, H is represented by a formula of H=(G+2) mod P.

The uplink PTRS port indicated by the downlink control information is indicated by a network device; or, the uplink PTRS port indicated by the downlink control information is defined by the protocol. Illustratively, the uplink PTRS port indicated by the downlink control information is an uplink PTRS port associated with an uplink DMRS port indicated by 2 bits, and can be a first uplink PTRS port or a second uplink PTRS port.

Illustratively, in a case that the uplink PTRS port indicated by the downlink control information is defined by the protocol, the downlink control information indicates the first uplink PTRS port or the second uplink PTRS port; or the downlink control information indicates an uplink PTRS port satisfying other defined conditions, for example, the downlink control information indicates an uplink PTRS port which is preferentially reported by the terminal.

For example, the terminal reports that it is considered that an uplink PTRS port corresponding to a second antenna panel has a better or worse receiving quality and needs to report preferentially, or the terminal considers that an uplink PT-RS port corresponding to a second antenna array or antenna port group needs to report preferentially. The terminal can report expected port information to the network device in advance through signaling, and the network device can determine an uplink PT-RS port number corresponding to received association information.

Alternatively, the first information field is a PTRS-DMRS association field.

In summary, the method for determining an association of an uplink PTRS port provided by the present embodiment defines one 2-bit information field on the DCI, and indicates the association between the first uplink PTRS ports and one uplink DMRS port in 8 uplink DMRS ports through the information field. The method is used for supporting estimation of a common phase error in uplink transmission when the terminal uses the 8 sending antenna ports, for example, for supporting the terminal to use the 8 sending antenna ports to detect the common phase error in a scenario of CB-based uplink transmission, or, for supporting the terminal to use the 8 sending antenna ports to detect the common phase error in a scenario of NCB-based uplink transmission.

For the second case, the step 220 in FIG 2 may further be implemented by a step 820, as shown in FIG 8. The step 820 may be provided as follows.

At step 820, in response to the number of the uplink PTRS ports being 2, an uplink DMRS port associated with a first uplink PTRS port is determined based on a codepoint of a first information field in the downlink control information and a first association; and an uplink DMRS port associated with a second uplink PTRS port is determined based on the codepoint of the first information field and a second association.

The first association refers to an association between the first uplink PTRS port corresponding to the codepoint of the first information field and the uplink DMRS port, and the second association refers to an association between the second uplink PTRS port corresponding to the codepoint of the first information field and the uplink DMRS port.

Illustratively, the first information field includes n bits, and a codepoint of the n bits is configured to indicate 2ⁿ association combinations, each of the association combinations corresponds to one uplink DMRS port associated with the first uplink PTRS port and one uplink DMRS port associated with the second uplink PTRS port, where n is a positive integer.

Illustratively, at most 8 uplink DMRS ports are divided into two DMRS port groups including a first port group and a second DMRS port group. It is allocated that a first uplink PTRS port corresponds to the first DMRS port group and a second uplink PTRS port corresponds to the second DMRS port group. Each association combination corresponds to one uplink DMRS port associated with the first uplink PTRS port in the first DMRS port group and one uplink DMRS port associated with the second uplink PTRS port in the second DMRS port group. As shown in Table 3, taking the value of n being 3 as an example, when the value of the codepoint is 000, an uplink DMRS port 0 is associated with an uplink PTRS port 0 in the first association, and an uplink DMRS port 4 is associated with an uplink PTRS port 1 in the second association. When the value of the codepoint is 100, the uplink DMRS port 0 is associated with the uplink PTRS port 0 in the first association, and an uplink DMRS port 5 is associated with the uplink PTRS port 1 in the second association.

**Table 3**

| Value of codepoint | Uplink DMRS port associated with uplink PTRS port 0 | Uplink DMRS port associated with uplink PTRS port 1 |
|---|---|---|
| 000 | Uplink DMRS port 0 (first uplink DMRS port in first DMRS port group) | Uplink DMRS port 4 (first uplink DMRS port in second DMRS port group) |
| 001 | Uplink DMRS port 1 (second uplink DMRS port in first DMRS port group) | Uplink DMRS port 5 (second uplink DMRS port in second DMRS port group) |
| 010 | Uplink DMRS port 2 (third uplink DMRS port in first DMRS port group) | Uplink DMRS port 6 (third uplink DMRS port in second DMRS port group) |
| 011 | Uplink DMRS port 3 (fourth uplink DMRS port in first DMRS port group) | Uplink DMRS port 7 (fourth uplink DMRS port in second DMRS port group) |
| 100 | Uplink DMRS port 0 (first uplink DMRS port in first DMRS port group) | Uplink DMRS port 5 (second uplink DMRS port in second DMRS port group) |
| 101 | Uplink DMRS port 1 (second uplink DMRS port in first DMRS port group) | Uplink DMRS port 7 (fourth uplink DMRS port in second DMRS port group) |
| 110 | Uplink DMRS port 2 (third uplink DMRS port in first DMRS port group) | Uplink DMRS port 4 (first uplink DMRS port in second DMRS port group) |
| 111 | Uplink DMRS port 3 (fourth uplink DMRS port in first DMRS port group) | Uplink DMRS port 6 (third uplink DMRS port in second DMRS port group) |

Alternatively, the first association and the second association are defined by a network device; or, the first associations and the second association are pre-defined.

Alternatively, n is obtained from a high-level configuration, or n is obtained from a pre-definition.

Alternatively, the first information field is a PTRS-DMRS association field.

In summary, the method for determining an association of an uplink PTRS port provided in the present embodiment defines the codepoint of the first information field in the DCI, the association between the uplink PTRS port and the uplink DMRS port, and indicates the association between two uplink PTRS ports and two uplink DMRS ports in the plurality of uplink DMRS ports via two associations corresponding to the two uplink PTRS ports. The method is used for supporting estimation of a common phase error in uplink transmission when the terminal uses 8 sending antenna ports, for example, for supporting the terminal to use the 8 sending antenna ports to detect the common phase error in a scenario of CB-based uplink transmission, or for supporting a terminal to use the 8 sending antenna ports to detect the common phase error in a scenario of NCB-based uplink transmission.

FIG 9 is a flow chart showing a method for determining an association of an uplink PTRS port provided by an exemplary embodiment of the present disclosure. The method is applied to a network device of the communication system shown in FIG 1. The method includes a following step.

At step 910, downlink control information is sent to a terminal, in which, the downlink control information is configured to indicate an association between an uplink PTRS port and an uplink DMRS port; a maximum number of uplink DMRS ports allocated for a terminal is 8, and a number of uplink PTRS ports includes 1 or 2.

Illustratively, the network device configures a first information field in the downlink control information, and then sends the downlink control information to the terminal on a PDCCH. Alternatively, the network device configures a first information field and a second information field in the downlink control information, and then sends the downlink control information to the terminal on the PDCCH.

Illustratively, in a case that the network device only configures the first information field, configuration manners of the first information field includes the followings.
(1) In response to the number of the uplink PTRS ports being 1, the first information field in the downlink control information includes 3 bits, and the 3 bits are configured to indicate the association between the uplink PTRS port and the uplink DMRS port.

Illustratively, 3 bits in binary may represent 0-7, and thus, the 3 bits may be used to indicate an association between uplink PTRS ports and at most 8 uplink DMRS ports.

Alternatively, a value of the 3 bits is configured to indicate one uplink DMRS port associated with PTRS transmission in the 8 uplink DMRS ports.

Alternatively, the 8 uplink DMRS ports are divided into two DMRS port groups, and each of the DMRS port groups includes 4 uplink DMRS ports; 1 bit of the 3 bits is configured to indicate one DMRS port group of the two DMRS port groups as a first DMRS port group, and remaining 2 bits of the 3 bits are configured to indicate one uplink DMRS port in the 4 uplink DMRS ports of the first DMRS port group.

Illustratively, the 1 bit is a most significant bit of 3 bits; or, the 1 bit is a least significant bit of the 3 bits.

Illustratively, the two DMRS port groups are obtained by dividing the 8 uplink DMRS ports based on a pre-defined manner of a protocol; or, the two DMRS port groups are obtained by allocating the 8 uplink DMRS ports by the network device.

(2) In response to the number of the uplink PTRS ports being 2, the first information field in the downlink control information includes 4 bits, and the 4 bits are configured to indicate the association between the uplink PTRS port and the uplink DMRS port.

Alternatively, at most 8 uplink DMRS ports are divided into two DMRS port groups including a first DMRS port group and a second DMRS port group. Illustratively, 8 uplink DMRS ports are divided into two DMRS port groups, and each of the DMRS port groups may include 4 uplink DMRS ports. A value of 2 bits of MSBs in the 4 bits is configured to indicate one uplink DMRS port associated with a first uplink PTRS port in a first DMRS port group; a value of 2 bits of LSBs in the 4 bits is used to indicate one uplink DMRS port associated with a second uplink PTRS port in a second DMRS port group.

(3) In response to the number of the uplink PTRS ports being 2, the first information field in the downlink control information includes 2 bits, and the 2 bits are configured to indicate the association between the uplink PTRS port and the uplink DMRS port.

Alternatively, at most 8 uplink DMRS ports are divided into two DMRS port groups including a first DMRS port group and a second DMRS port group. Illustratively, 8 uplink DMRS ports are divided into the two DMRS port groups, and each of the DMRS port groups may include 4 uplink DMRS ports. A value of the 2 bits is configured to indicate an uplink DMRS port associated with a first uplink PTRS port in the first DMRS port group; or, a value of the 2 bits is configured to indicate an uplink DMRS port associated with a second uplink PTRS port in the second DMRS port group.

The uplink DMRS port associated with one uplink PTRS port may be configured by the network device for the terminal, and the uplink DMRS port associated with another uplink PTRS port may be determined by the terminal based on a default rule.

Illustratively, in a case that the value of the 2 bits is configured to indicate the uplink DMRS port associated with the first uplink PTRS port in the first DMRS port group, the terminal determines that the uplink DMRS port associated with the second uplink PTRS port is: an uplink DMRS port corresponding to a maximum port number in the second DMRS port group; or an uplink DMRS port corresponding to a minimum port number in the second DMRS port group; or any uplink DMRS port in the second DMRS port group; or one fixed uplink DMRS port in the second DMRS port group; or an H^{th} uplink DMRS port in the second DMRS port group, G represents that the uplink DMRS port associated with the first uplink PTRS port is a G^{th} uplink DMRS port in the first DMRS port group, H is a remainder of a sum of G and 2 divided by P, P is a minimum number of ports corresponding to the two DMRS port groups, and values of G, H and P are all positive integers not greater than 4.

Illustratively, in a case that the value of the 2 bits is configured to indicate the uplink DMRS port associated with the second uplink PTRS port in the second DMRS port group, the terminal determines that the uplink DMRS port associated with the first uplink PTRS port is: an uplink DMRS port corresponding to a maximum port number in the first DMRS port group; or an uplink DMRS port corresponding to a minimum port number in the first DMRS port group; or any uplink DMRS port in the first DMRS port group; or one fixed uplink DMRS port in the first DMRS port group; or an H^{th} uplink DMRS port in the first DMRS port group, G represents that the uplink DMRS port associated with the second uplink PTRS port is a G^{th} uplink DMRS port in the second DMRS port group, H is a remainder of a sum of G and 2 divided by P, P is a minimum number of ports corresponding to the two DMRS port groups, and values of G, H and P are all positive integers not greater than 4.

Illustratively, the uplink PTRS port indicated by the downlink control information is indicated by the network device; or, the uplink PTRS port indicated by the downlink control information is defined by the protocol.

Illustratively, in a case that the uplink PTRS port is defined by the protocol, the downlink control information indicates the first uplink PTRS port or the second uplink PTRS port; or the downlink control information indicates an uplink PTRS port which is preferentially reported by the terminal.

(4) In response to the number of the uplink PTRS ports being 2, a codepoint of a first information field in the downlink control information is configured to indicate an uplink DMRS port associated with a first uplink PTRS port in a first association and an uplink DMRS port associated with a second uplink PTRS port in a second association; the first association refers to an association between the first uplink PTRS port corresponding to the codepoint of the first information field and the uplink DMRS port, and the second association refers to an association between the second uplink PTRS port corresponding to the codepoint of the first information field and the uplink DMRS port.

Alternatively, the first information field includes n bits, and a codepoint of the n bits is configured to indicate 2ⁿ association combinations, each of the association combinations corresponds to one uplink DMRS port associated with the first uplink PTRS port and one uplink DMRS port associated with the second uplink PTRS port, where n is a positive integer.

Illustratively, the first association and the second association are defined by a network device; or, the first and second associations are pre-defined.

Illustratively, n is obtained from a high-level configuration, or n is obtained by pre-defining.

Illustratively, in a case that the network device is configured with a first information field and a second information field, a configuration manner of the first information field and the second information field includes the followings.
(1) In response to the number of uplink PTRS ports being 1, at most 8 uplink DMRS ports are divided into two DMRS port groups, the second information field in the downlink control information is configured to indicate a first DMRS port group in the two DMRS port groups, and the first information field in the downlink control information is configured to indicate one uplink DMRS port in the first DMRS port group.

Illustratively, the above-mentioned first information field includes 2 bits, and the second information field includes 1 bit.

Alternatively, the first information field is a PTRS-DMRS association field.

Alternatively, the 1 bit in the second information field is a reserved bit in the second information field.

(2) In response to the number of uplink PTRS ports being 2, the first information field in the downlink control information includes 2 bits, and at most 8 uplink DMRS ports are divided into two DMRS port groups, where the first information field is configured to indicate a first uplink DMRS port associated with a first uplink PTRS port in the first DMRS port group, and the second information field is configured to indicate a second uplink DMRS port associated with a second uplink PTRS port in the second DMRS port group.

Illustratively, the first information field includes 2 bits and the second information field includes 2 bits.

Alternatively, the 2 bit in the second information field are reserved bits in the second information field.

Alternatively, the first uplink PTRS port is an uplink PTRS port corresponding to an antenna panel with a largest number of layers mapped in antenna panels corresponding to the two uplink PTRS ports.

Alternatively, in each of the above cases, the first information field is a PTRS-DMRS association field.

Alternatively, in each of the above cases, the number of uplink PTRS ports is configured by higher layer signaling, and a number of uplink PT-RS ports sent by the terminal is consistent with the configured number of uplink PT-RS ports.

Illustratively, the network device can send the downlink control information to the terminal in a scenario of CB-based PUSCH transmission; or the network device can send the downlink control information to the terminal in a scenario of NCB-based PUSCH transmission; or, the network device can send the downlink control information to the terminal in a scenario of scheduling-free CG PUSCH transmission.

In summary, in the method for determining an association of an uplink PTRS port provided by an embodiment, the network device sends teh downlink control information to the terminal, so that the terminal determines the association between the uplink PTRS port and the uplink DMRS port, namely, determines one or two uplink DMRS ports associated with the uplink PTRS port or ports from the at most 8 uplink DMRS ports according to the downlink control information. The method is used for supporting estimation of a common phase error in uplink transmission when the terminal uses the at most 8 sending antenna ports, for example, for supporting the terminal to use the 8 sending antenna ports to detect the common phase error in a scenario of CB-based uplink transmission, or for supporting the terminal to use the 8 sending antenna ports to detect the common phase error in a scenario of NCB-based uplink transmission.

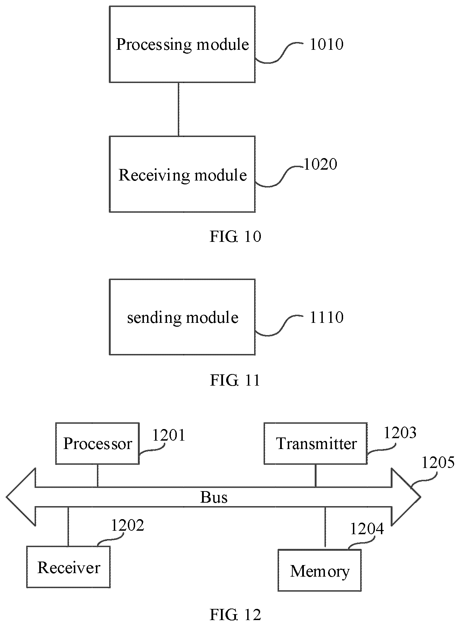

FIG 10 illustrates a block diagram of an apparatus for determining an association of PTRS ports provided by an exemplary embodiment of the present disclosure. The apparatus may be implemented as a part or all of a UE through software, hardware, or a combination of both. The apparatus includes:
a processing module 1010 configured to determine an association between an uplink PTRS port and an uplink DMRS port based on downlink control information;
where a maximum number of uplink DMRS ports allocated to a terminal is 8, and a number of uplink PTRS ports comprises 1 or 2.

In some embodiments, the processing module 1010 is configured to, in response to the number of the uplink PTRS ports being 1, determine the association between the uplink PTRS port and the uplink DMRS port based on a first information field in the downlink control information.

In some embodiments, the first information field comprises 3 bits, a value of the 3 bits being configured to indicate one uplink DMRS port associated with PTRS transmission in the 8 uplink DMRS ports.

In some embodiments, the 8 uplink DMRS ports are divided into two DMRS port groups, each of the DMRS port groups including 4 uplink DMRS ports;
the first information field comprises 3 bits, 1 bit of the 3 bits is configured to indicate one DMRS port group of the two DMRS port groups as a first DMRS port group, and remaining 2 bits of the 3 bits are configured to indicate one uplink DMRS port in 4 uplink DMRS ports of the first DMRS port group.

In some embodiments, the 1 bit is a most significant bit of the 3 bits; or, the 1 bit is a least significant byte of the 3 bits.

In some embodiments, the two DMRS port groups are obtained by dividing the 8 uplink DMRS ports based on a pre-defined manner of a protocol; or, the two DMRS port groups are obtained by allocating the 8 uplink DMRS ports by a network device.

In some embodiments, the processing module 1010 is configured to, in response to the number of the uplink PTRS ports being 2, determine the association between the uplink PTRS port and the uplink DMRS port based on a first information field in the downlink control information; where the first information field includes 4 bits.

In some embodiments, the 8 uplink DMRS ports are divided into two DMRS port groups, each of the DMRS port groups including 4 uplink DMRS ports;
a value of 2 bits of most significant bits (MSBs) in the 4 bits is configured to indicate one uplink DMRS port associated with a first uplink PTRS port in a first DMRS port group; and a value of 2 bits of least significant bits (LSBs) in the 4 bits is configured to indicate one uplink DMRS port associated with a second uplink PTRS port in a second DMRS port group.

In some embodiments, the processing module 1010 is configured to, in response to the number of the uplink PTRS ports being 2, determine the association between the uplink PTRS port and the uplink DMRS port based on a first information field in the downlink control information; where the first information field includes 2 bits.

In some embodiments, the 8 uplink DMRS ports are divided into two DMRS port groups, each of the DMRS port groups including 4 uplink DMRS ports;
a value of the 2 bits is configured to indicate an uplink DMRS port associated with a first uplink PTRS port in a first DMRS port group; or, a value of the 2 bits is configured to indicate an uplink DMRS port associated with a second uplink PTRS port in a second DMRS port group.

In some embodiments, the uplink PTRS port indicated by the downlink control information is indicated by a network device; or, the uplink PTRS port indicated by the downlink control information is defined by the protocol.

In some embodiments, in a case that the uplink PTRS port indicated by the downlink control information is defined by the protocol,
the downlink control information indicates a first uplink PTRS port or a second uplink PTRS port; or the downlink control information indicates an uplink PTRS port which is preferentially reported by the terminal.

In some embodiments, in a case that the value of the 2 bits is configured to indicate the uplink DMRS port associated with the first uplink PTRS ports in the first DMRS port group,
the uplink DMRS port associated with the second uplink PTRS port is an uplink DMRS port corresponding to a maximum port number in the second DMRS port group; or the uplink DMRS port associated with the second uplink PTRS port is an uplink DMRS port corresponding to a minimum port number in the second DMRS port group; or the uplink DMRS port associated with the second uplink PTRS port is any one uplink DMRS port in the second DMRS port group; or the uplink DMRS port associated with the second uplink PTRS port is a fixed uplink DMRS port in the second DMRS port group;
or, in response to the uplink DMRS port associated with the first uplink PTRS port being a G^{th} uplink DMRS port in the first DMRS port group, the uplink DMRS port associated with the second uplink PTRS port is an H^{th} uplink DMRS port in the second DMRS port group, where H is a remainder of a sum of G and 2 divided by P, P is a minimum number of ports corresponding to the two DMRS port groups, and values of G, H and P are all positive integers not greater than 4.

In some embodiments, in a case that the value of the 2 bits is configured to indicate the uplink DMRS port associated with the second uplink PTRS port in the second DMRS port group:
the uplink DMRS port associated with the first uplink PTRS port is an uplink DMRS port corresponding to a maximum port number in the first DMRS port group; or the uplink DMRS port associated with the first uplink PTRS port is an uplink DMRS port corresponding to a minimum port number in the first DMRS port group; or the uplink DMRS port associated with the first uplink PTRS port is any one uplink DMRS port in the first DMRS port group; or the uplink DMRS port associated with the first uplink PTRS port is a fixed uplink DMRS port in the first DMRS port group;
or, in response to the uplink DMRS port associated with the second uplink PTRS port being a G^{th} uplink DMRS port in the second DMRS port group, the uplink DMRS port associated with the first uplink PTRS port is an H^{th} uplink DMRS port in the first DMRS port group, where H is a remainder of a sum of G and 2 divided by P, P is a minimum number of ports corresponding to the two DMRS port groups, and values of G, H and P are all positive integers not greater than 4.

In some embodiments, the processing module 1010 is configured to, in response to the number of the uplink PTRS ports being 2, determine an uplink DMRS port associated with a first uplink PTRS port based on a codepoint of a first information field in the downlink control information and a first association; and determining an uplink DMRS port associated with a second uplink PTRS port based on the codepoint of the first information field and a second association;
where the first association refers to an association between the first uplink PTRS port corresponding to the codepoint of the first information field and the uplink DMRS port, and the second association refers to an association between the second uplink PTRS port corresponding to the codepoint of the first information field and the uplink DMRS port.

In some embodiments, the first association and the second association are defined by a network device; or, the first and second associations are pre-defined.

In some embodiments, the first information field includes n bits, a codepoint of the n bits being configured to indicate 2ⁿ association combinations, each of the association combinations corresponding to one uplink DMRS port associated with the first uplink PTRS port and one uplink DMRS port associated with the second uplink PTRS port, where the n is a positive integer.

In some embodiments, n is obtained from a high-level configuration or n is obtained by pre-defining.

In some embodiments, the processing module 1010 is configured to determine, in response to the number of the uplink PTRS ports being 1, the association between the uplink PTRS port and the uplink DMRS port based on a first information field and a second information field in the downlink control information.

In some embodiments, the 8 uplink DMRS ports are divided into two DMRS port groups, each of the DMRS port groups including 4 uplink DMRS ports;
the second information field is configured to indicate a first DMRS port group in the two DMRS port groups, and the first information field is configured to indicate one uplink DMRS port in the first DMRS port group.

In some embodiments, 1 bit in the second information field is used to indicate a first DMRS port group of the two DMRS port groups and 2 bits in the first information field is used to indicate one uplink DMRS port of the first DMRS port group.

In some embodiments, the 1 bit in the second information field is a reserved bit in the second information field.

In some embodiments, the processing module 1010 is configured to determine the association between the uplink PTRS port and the uplink DMRS port based on the first information field and the second information field in downlink control information; where the first information field includes 2 bits, and the second information field includes 2 bits.

In some embodiments, the 8 uplink DMRS ports are divided into two DMRS port groups, each of the DMRS port groups including 4 uplink DMRS ports;
the first information field is configured to indicate a first uplink DMRS port associated with a first uplink PTRS port in a first DMRS port group; the second information field is configured to indicate a second uplink DMRS port associated with a second uplink PTRS port in the second DMRS port group.

In some embodiments, 2 bits in the second information field are reserved bits in the second information field.

In some embodiments, the first uplink PTRS port is an uplink PTRS port corresponding to an antenna panel with a largest number of layers mapped in antenna panels corresponding to the two uplink PTRS ports.

In some embodiments, the first information field is a PTRS-DMRS association field.

In some embodiments, the number of uplink PTRS ports is configured by higher layer signaling, and a number of uplink PT-RS ports sent by the terminal is consistent with the configured number of uplink PT-RS ports.

In some embodiments, the processing module 1010 is configured to:
in a scenario of codebook (CB)-based physical uplink shared channel (PUSCH) transmission, determine the association between the uplink PTRS port and the uplink DMRS port based on the downlink control information; or, in a scenario of non-codebook (NCB)-based PUSCH transmission, determine the association between the uplink PTRS port and the uplink DMRS port based on the downlink control information; or in a scenario of scheduling-free configured grant CG PUSCH transmission, determine the association between the uplink PTRS port and the uplink DMRS port based on the downlink control information.

In some embodiments, the apparatus further includes a receiving module 1020.

The receiving module 1020 is configured to receive the DCI sent by the network device.

FIG 11 illustrates a block diagram of an apparatus for determining an association of PTRS ports according to an exemplary embodiment of the present disclosure. The apparatus may be implemented as a part or all of the network device through software, hardware, or a combination of both. The apparatus includes:
a sending module 1110 configured to send downlink control information to a terminal, wherein the downlink control information is configured to indicate an association between an uplink PTRS port and an uplink DMRS port;
where a maximum number of uplink DMRS ports allocated to a terminal is 8, and a number of uplink PTRS ports comprises 1 or 2.

In some embodiments, in response to the number of the uplink PTRS ports being 1, a first information field in the downlink control information comprises 3 bits, and the 3 bits are configured to indicate the association between the uplink PTRS port and the uplink DMRS port.

In some embodiments, a value of the 3 bits is configured to indicate one uplink DMRS port associated with PTRS transmission in the 8 uplink DMRS ports.

In some embodiments, the 8 uplink DMRS ports are divided into two DMRS port groups, each of the DMRS port groups including 4 uplink DMRS ports;
1 bit of the 3 bits is configured to indicate one DMRS port group of the two DMRS port groups as a first DMRS port group, and remaining 2 bits of the 3 bits are configured to indicate one uplink DMRS port in 4 uplink DMRS ports of the first DMRS port group.

In some embodiments, the 1 bit is a most significant bit of the 3 bits; or, the 1 bit is a least significant byte of the 3 bits.

In some embodiments, the two DMRS port groups are obtained by dividing the 8 uplink DMRS ports based on a pre-defined manner of a protocol; or, the two DMRS port groups are obtained by allocating the 8 uplink DMRS ports by the network device.

In some embodiments, in response to the number of the uplink PTRS ports being 2, a first information field in the downlink control information comprises 4 bits, and the 4 bits are configured to indicate the association between the uplink PTRS port and the uplink DMRS port.

In some embodiments, the 8 uplink DMRS ports are divided into two DMRS port groups, each of the DMRS port groups including 4 uplink DMRS ports;
a value of 2 bits of MSBs in the 4 bits is configured to indicate one uplink DMRS port associated with a first uplink PTRS port in a first DMRS port group; and a value of 2 bits of LSBs in the 4 bits is configured to indicate one uplink DMRS port associated with a second uplink PTRS port in a second DMRS port group.

In some embodiments, in response to the number of the uplink PTRS ports being 2, a first information field in the downlink control information comprises 2 bits, and the 2 bits are configured to indicate the association between the uplink PTRS port and the uplink DMRS port.

In some embodiments, the 8 uplink DMRS ports are divided into two DMRS port groups, each of the DMRS port groups including 4 uplink DMRS ports;
a value of the 2 bits is configured to indicate an uplink DMRS port associated with a first uplink PTRS port in a first DMRS port group; or, a value of the 2 bits is configured to indicate an uplink DMRS port associated with a second uplink PTRS port in a second DMRS port group.

In some embodiments, the uplink PTRS port indicated by the downlink control information is indicated by the network device; or, the uplink PTRS port indicated by the downlink control information is defined by the protocol.

In some embodiments, in a case that the uplink PTRS port indicated by the downlink control information is defined by the protocol, the downlink control information indicates a first uplink PTRS port or a second uplink PTRS port; or the downlink control information indicates an uplink PTRS port which is preferentially reported by the terminal.

In some embodiments, in a case that the value of the 2 bits is configured to indicate the uplink DMRS port associated with the first uplink PTRS port in the first DMRS port group,
the uplink DMRS port associated with the second uplink PTRS port is an uplink DMRS port corresponding to a maximum port number in the second DMRS port group; or the uplink DMRS port associated with the second uplink PTRS port is an uplink DMRS port corresponding to a minimum port number in the second DMRS port group; or the uplink DMRS port associated with the second uplink PTRS port is any one uplink DMRS port in the second DMRS port group; or the uplink DMRS port associated with the second uplink PTRS port is a fixed uplink DMRS port in the second DMRS port group;
or, in response to the uplink DMRS port associated with the first uplink PTRS port being a G^{th} uplink DMRS port in the first DMRS port group, the uplink DMRS port associated with the second uplink PTRS port is an H^{th} uplink DMRS port in the second DMRS port group, where H is a remainder of a sum of G and 2 divided by P, P is a minimum number of ports corresponding to the two DMRS port groups, and values of G, H and P are all positive integers not greater than 4.

In some embodiments, in a case that the value of the 2 bits is configured to indicate the uplink DMRS port associated with the second uplink PTRS port in the second DMRS port group,
the uplink DMRS port associated with the first uplink PTRS port is an uplink DMRS port corresponding to a maximum port number in the first DMRS port group; or the uplink DMRS port associated with the first uplink PTRS port is an uplink DMRS port corresponding to a minimum port number in the first DMRS port group; or the uplink DMRS port associated with the first uplink PTRS port is any one uplink DMRS port in the first DMRS port group; or the uplink DMRS port associated with the first uplink PTRS port is a fixed uplink DMRS port in the first DMRS port group;
or, in response to the uplink DMRS port associated with the second uplink PTRS port being a G^{th} uplink DMRS port in the second DMRS port group, the uplink DMRS port associated with the first uplink PTRS port is an H^{th} uplink DMRS port in the first DMRS port group, where H is a remainder of a sum of G and 2 divided by P, P is a minimum number of ports corresponding to the two DMRS port groups, and values of G, H and P are all positive integers not greater than 4.

In some embodiments, in response to the number of the uplink PTRS ports being 2, a codepoint of a first information field in the downlink control information is configured to indicate an uplink DMRS port associated with a first uplink PTRS port in a first association and an uplink DMRS port associated with a second uplink PTRS port in a second association;
where the first association refers to an association between the first uplink PTRS port corresponding to the codepoint of the first information field and the uplink DMRS port, and the second association refers to an association between the second uplink PTRS port corresponding to the codepoint of the first information field and the uplink DMRS port.

In some embodiments, the first association and the second association are defined by a network device; or, the first and second associations are pre-defined.

In some embodiments, the first information field comprises n bits, a codepoint of the n bits being configured to indicate 2ⁿ association combinations, each of the association combinations corresponding to one uplink DMRS port associated with the first uplink PTRS port and one uplink DMRS port associated with the second uplink PTRS port, where n is a positive integer.

In some embodiments, n is obtained from a high-level configuration, or n is obtained by pre-defining.

In some embodiments, in response to the number of uplink PTRS ports being 1, at most 8 uplink DMRS ports are divided into two DMRS port groups, a second information field in the downlink control information is configured to indicate a first DMRS port group in the two DMRS port groups, and a first information field in the downlink control information is configured to indicate one uplink DMRS port in the first DMRS port group.

In some embodiments, 1 bit in the second information field is used to indicate a first DMRS port group of the two DMRS port groups and 2 bits in the first information field is used to indicate one uplink DMRS port of the first DMRS port group.

In some embodiments, 1 bit in the second information field is a reserved bit in the second information field.

In some embodiments, in response to the number of the uplink PTRS ports being 2, the downlink control information includes a first information field and a second information field, and the first information field and the second information field are configured to indicate the association between the uplink PTRS port and the uplink DMRS port; where the first information field includes 2 bits, and the second information field includes 2 bits.

In some embodiments, the 8 uplink DMRS ports are divided into two DMRS port groups, each of the DMRS port groups including 4 uplink DMRS ports;
the first information field is configured to indicate a first uplink DMRS port associated with a first uplink PTRS port in a first DMRS port group; the second information field is configured to indicate a second uplink DMRS port associated with a second uplink PTRS port in the second DMRS port group.

In some embodiments, 2 bits in the second information field are reserved bits in the second information field.

In some embodiments, the first uplink PTRS port is an uplink PTRS ports corresponding to an antenna panel with a largest number of layers mapped in antenna panels corresponding to the two uplink PTRS ports.

In some embodiments, the first information field is a PTRS-DMRS association field.

In some embodiments, the number of uplink PTRS ports is configured by higher layer signaling, and a number of uplink PT-RS ports sent by the terminal is consistent with the configured number of uplink PT-RS ports.

In some embodiments, the transmitting module 1110 is configured to:
in a scenario of CB-based PUSCH transmission, send the downlink control information to the terminal; or in a scenario of NCB-based PUSCH transmission, send the downlink control information to the terminal; or, in a scenario of scheduling-free CG PUSCH transmission, send the downlink control information to the terminal.

FIG 12 is a structural schematic diagram showing a UE provided by an exemplary embodiment of the present disclosure. The UE includes: a processor 1201, a receiver 1202, a transmitter 1203, a memory 1204, and a bus 1205.

The processor 1201 includes one or more processing cores and runs software programs and modules to perform various functional applications and information processing.

The receiver 1202 and the transmitter 1203 may be implemented as a communication assembly, which may be a communication chip.

The memory 1204 is coupled to the processor 1201 via the bus1205.

The memory 1204 may be configured to store at least one instruction, and the processor 1201 may be configured to execute the at least one instruction to implement respective steps in the method embodiments described above.

Further, the memory 1204 may be implemented by any type of volatile or non-volatile storage device or a combination thereof. The volatile or non-volatile storage device includes, but is not limited to, a magnetic or an optical disk, an electrically erasable programmable read-only memory (EEPROM), an erasable programmable read-only memory (EPROM), a static random access memory (SRAM), a read-only memory (ROM), a magnetic memory, a flash memory, or a programmable read-only memory (PROM).

In an exemplary embodiment, a non-transitory computer-readable storage medium including instructions is further provided, such as a memory including instructions. The above-mentioned instructions can be executable by the processor of the UE so as to complete the above method for determining an association of an uplink PTRS port. For example, the non-transitory computer-readable storage medium may be an ROM, a random access memory (RAM), a compact disc read only memory (CD-ROM), a cassette, a floppy disk, an optical data storage device, etc.

For a non-transitory computer-readable storage medium, when instructions in the non-transitory computer-readable storage medium are executed by the processor of the UE, the UE is caused to perform the above method for determining an association of an uplink PTRS port.

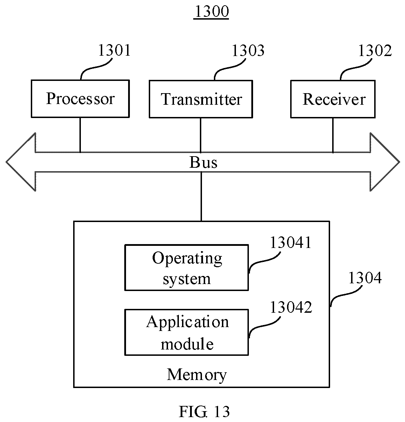

FIG 13 is a block diagram showing a network device 1300 according to an exemplary embodiment. The network device 1300 may be a base station.

The network device 1300 may include: a processor 1301, a receiver 1302, a transmitter 1303, and a memory 1304. The receiver 1302, the transmitter 1303, and the memory 1304 are each coupled to the processor 1301 via a bus.

The processor 1301 includes one or more processing cores and runs software programs and modules to perform the method for determining an association of an uplink PTRS port provided by an embodiment of the present disclosure. The memory 1304 may be configured to store software programs and modules. Specifically, the memory 1304 may store an operating system 13041, an application module 13042 required for at least one function. The receiver 1302 is configured to receive communication data transmitted by other devices, and the transmitter 1303 is configured to transmit communication data to other devices.

An exemplary embodiment of the present disclosure also provides a computer-readable storage medium having at least one instruction, at least one segment of program, a code set, or an instruction set stored thereon. The at least one instruction, the at least one segment of program, the code set, or the instruction set is loaded and executed by the processor to implement the method for determining an association of an uplink PTRS port as provided by respective method embodiments as described above.

An exemplary embodiment of the present disclosure also provides a computer program product including computer instructions stored in a computer-readable storage medium. A processor of a computer device reads the computer instructions from the computer-readable storage medium, and executes the computer instructions to cause the computer device to perform the method for determining an association of an uplink PTRS port as provided by respective method embodiments as described above.

It should be understood that "a plurality of......" mentioned herein means two or more. "And/or......" describes an association relationship of associated objects, and indicates that three relationships may exist. For example, A and/or B can denote three situations that A exists alone; A and B exist at the same time; and B exists alone. The character "/" generally indicates that a relationship between preceding and following associated objects is an "or" relationship.

Other implementation solutions of the present disclosure will be readily envisioned by those skilled in the art after considering the specification and putting the present disclosure disclosed herein into practice. The present disclosure is intended to cover any variations, purposes or adaptive changes of the present disclosure, and these variations, purposes or adaptive changes conform to general principles of the present disclosure and include common general knowledge or conventional technical means in the undisclosed technical field of the present disclosure. The specification and the embodiments are only regarded to be exemplary, and the true scope and spirits of the present disclosure are appointed by the following claims.

It should be understood that the present disclosure is not limited to the precise structures which have been described above and shown in the accompanying drawings, and various modifications and changes may be made without departing from the scope thereof. The scope of the present disclosure is limited only by the appended claims.

## Claims

1. A method for determining an association of an uplink PTRS port, performed by a terminal, comprising:
determining an association between an uplink phase tracking reference signal (PTRS) port and an uplink demodulation reference signal (DMRS) port based on downlink control information (DCI);
wherein a maximum number of uplink DMRS ports allocated to the terminal is 8, and a number of uplink PTRS ports comprises 1 or 2.

2. The method according to claim 1, wherein determining the association between the uplink PTRS port and the uplink DMRS port based on the downlink control information comprises:
in response to the number of the uplink PTRS ports being 1, determining the association between the uplink PTRS port and the uplink DMRS port based on a first information field in the downlink control information.

3. The method according to claim 2, wherein the first information field comprises 3 bits, a value of the 3 bits being configured to indicate one uplink DMRS port associated with PTRS transmission in the 8 uplink DMRS ports.

4. The method according to claim 2, wherein the 8 uplink DMRS ports are divided into two DMRS port groups, each of the DMRS port groups comprising 4 uplink DMRS ports;
the first information field comprises 3 bits, 1 bit of the 3 bits is configured to indicate one DMRS port group of the two DMRS port groups as a first DMRS port group, and remaining 2 bits of the 3 bits are configured to indicate one uplink DMRS port in 4 uplink DMRS ports of the first DMRS port group.

5. The method according to claim 4, wherein
the 1 bit is a most significant bit of the 3 bits;
or,
the 1 bit is a least significant bit of the 3 bits.

6. The method according to claim 4, wherein
the two DMRS port groups are obtained by dividing the 8 uplink DMRS ports based on a pre-defined manner of a protocol;
or,
the two DMRS port groups are obtained by allocating the 8 uplink DMRS ports by a network device.

7. The method according to claim 1, wherein determining the association between the uplink PTRS port and the uplink DMRS port based on the downlink control information comprises:
in response to the number of the uplink PTRS ports being 2, determining the association between the uplink PTRS port and the uplink DMRS port based on a first information field in the downlink control information;
wherein the first information field comprises 4 bits.

8. The method according to claim 7, wherein the 8 uplink DMRS ports are divided into two DMRS port groups, each of the DMRS port groups comprising 4 uplink DMRS ports;
a value of 2 bits of most significant bits (MSBs) in the 4 bits is configured to indicate one uplink DMRS port associated with a first uplink PTRS port in a first DMRS port group;
a value of 2 bits of least significant bits (LSBs) in the 4 bits is configured to indicate one uplink DMRS port associated with a second uplink PTRS port in a second DMRS port group.

9. The method according to claim 1, wherein determining the association between the uplink PTRS port and the uplink DMRS port based on the downlink control information comprises:
in response to the number of the uplink PTRS ports being 2, determining the association between the uplink PTRS port and the uplink DMRS port based on a first information field in the downlink control information;
wherein the first information field comprises 2 bits.

10. The method according to claim 9, wherein the 8 uplink DMRS ports are divided into two DMRS port groups, each of the DMRS port groups comprising 4 uplink DMRS ports;
a value of the 2 bits is configured to indicate an uplink DMRS port associated with a first uplink PTRS port in a first DMRS port group;
or,
a value of the 2 bits is configured to indicate an uplink DMRS port associated with a second uplink PTRS port in a second DMRS port group.

11. The method according to claim 10, wherein
the uplink PTRS port indicated by the downlink control information is indicated by a network device;
or,
the uplink PTRS port indicated by the downlink control information is defined by a protocol.

12. The method according to claim 11, wherein in a case that the uplink PTRS port indicated by the downlink control information is defined by the protocol,
the downlink control information indicates the first uplink PTRS port or the second uplink PTRS port;
or,
the downlink control information indicates an uplink PTRS port which is preferentially reported by the terminal.

13. The method according to claim 10, wherein in a case that the value of the 2 bits is configured to indicate the uplink DMRS port associated with the first uplink PTRS ports in the first DMRS port group,
the uplink DMRS port associated with the second uplink PTRS port is an uplink DMRS port corresponding to a maximum port number in the second DMRS port group;
or,
the uplink DMRS port associated with the second uplink PTRS port is an uplink DMRS port corresponding to a minimum port number in the second DMRS port group;
or,
the uplink DMRS port associated with the second uplink PTRS port is any one uplink DMRS port in the second DMRS port group;
or,
in response to the uplink DMRS port associated with the first uplink PTRS port being a G^{th} uplink DMRS port in the first DMRS port group, the uplink DMRS port associated with the second uplink PTRS port is an H^{th} uplink DMRS port in the second DMRS port group, where H is a remainder of a sum of G and 2 divided by P, P is a minimum number of ports corresponding to the two DMRS port groups, and values of G, H and P are all positive integers not greater than 4.

14. The method according to claim 10, wherein in a case that the value of the 2 bits is configured to indicate the uplink DMRS port associated with the second uplink PTRS port in the second DMRS port group,
the uplink DMRS port associated with the first uplink PTRS port is an uplink DMRS port corresponding to a maximum port number in the first DMRS port group;
or,
the uplink DMRS port associated with the first uplink PTRS port is an uplink DMRS port corresponding to a minimum port number in the first DMRS port group;
or,
the uplink DMRS port associated with the first uplink PTRS port is any one uplink DMRS port in the first DMRS port group;
or,
in response to the uplink DMRS port associated with the second uplink PTRS port being a G^{th} uplink DMRS port in the second DMRS port group, the uplink DMRS port associated with the first uplink PTRS port is an H^{th} uplink DMRS port in the first DMRS port group, where H is a remainder of a sum of G and 2 divided by P, P is a minimum number of ports corresponding to the two DMRS port groups, and values of G, H and P are all positive integers not greater than 4.

15. The method according to claim 1, wherein determining the association between the uplink PTRS port and the uplink DMRS port based on the downlink control information comprises:
in response to the number of the uplink PTRS ports being 2, determining an uplink DMRS port associated with a first uplink PTRS port based on a codepoint of a first information field in the downlink control information and a first association; and determining an uplink DMRS port associated with a second uplink PTRS port based on the codepoint of the first information field and a second association;
wherein the first association refers to an association between the first uplink PTRS port corresponding to the codepoint of the first information field and the uplink DMRS port, and the second association refers to an association between the second uplink PTRS port corresponding to the codepoint of the first information field and the uplink DMRS port.

16. The method according to claim 15, wherein
the first association and the second association are defined by a network device;
or,
the first association and the second association are pre-defined.

17. The method according to claim 15, wherein the first information field comprises n bits, a codepoint of the n bits being configured to indicate 2ⁿ association combinations, each of the association combinations corresponding to one uplink DMRS port associated with the first uplink PTRS port and one uplink DMRS port associated with the second uplink PTRS port, where n is a positive integer.

18. The method according to claim 17, wherein n is obtained from a high-level configuration or n is obtained by pre-defining.

19. The method according to any one of claims 2 to 18, wherein the first information field is a PTRS-DMRS association field.

20. The method according to any one of claims 1 to 18, wherein the number of uplink PTRS ports is configured by higher layer signaling, and a number of uplink PT-RS ports sent by the terminal is consistent with the configured number of uplink PT-RS ports.

21. The method according to any one of claims 1 to 18, wherein determining the association between the uplink PTRS port and the uplink DMRS port based on the downlink control information comprises:
in a scenario of codebook (CB)-based physical uplink shared channel (PUSCH) transmission, determining the association between the uplink PTRS port and the uplink DMRS port based on the downlink control information;
or,
in a scenario of non-codebook (NCB)-based PUSCH transmission, determining the association between the uplink PTRS port and the uplink DMRS port based on the downlink control information;
or,
in a scenario of scheduling-free configured grant (CG) PUSCH transmission, determining the association between the uplink PTRS port and the uplink DMRS port based on the downlink control information.

22. A method for determining an association of an uplink PTRS port, performed by a network device, comprising:
sending downlink control information to a terminal, wherein the downlink control information is configured to indicate an association between an uplink PTRS port and an uplink DMRS port;
wherein a maximum number of uplink DMRS ports allocated to a terminal is 8, and a number of uplink PTRS ports comprises 1 or 2.

23. The method according to claim 22, wherein
in response to the number of the uplink PTRS ports being 1, a first information field in the downlink control information comprises 3 bits, and the 3 bits are configured to indicate the association between the uplink PTRS port and the uplink DMRS port.

24. The method according to claim 23, wherein
a value of the 3 bits is configured to indicate one uplink DMRS port associated with PTRS transmission in the 8 uplink DMRS ports.

25. The method according to claim 23, wherein the 8 uplink DMRS ports are divided into two DMRS port groups, each of the DMRS port groups comprising 4 uplink DMRS ports;
1 bit of the 3 bits is configured to indicate one DMRS port group of the two DMRS port groups as a first DMRS port group, and remaining 2 bits of the 3 bits are configured to indicate one uplink DMRS port in 4 uplink DMRS ports of the first DMRS port group.

26. The method according to claim 25, wherein
the 1 bit is a most significant bit of the 3 bits;
or,
the 1 bit is a least significant bit of the 3 bits.

27. The method according to claim 25, wherein
the two DMRS port groups are obtained by dividing the 8 uplink DMRS ports based on a pre-defined manner of a protocol;
or,
the two DMRS port groups are obtained by allocating the 8 uplink DMRS ports by the network device.

28. The method according to claim 22, wherein
in response to the number of the uplink PTRS ports being 2, a first information field in the downlink control information comprises 4 bits, and the 4 bits are configured to indicate the association between the uplink PTRS port and the uplink DMRS port.

29. The method according to claim 28, wherein the 8 uplink DMRS ports are divided into two DMRS port groups, each of the DMRS port groups comprising 4 uplink DMRS ports;
a value of 2 bits of MSBs in the 4 bits is configured to indicate one uplink DMRS port associated with a first uplink PTRS port in a first DMRS port group; and
a value of 2 bits of LSBs in the 4 bits is configured to indicate one uplink DMRS port associated with a second uplink PTRS port in a second DMRS port group.

30. The method according to claim 22, wherein
in response to the number of the uplink PTRS ports being 2, a first information field in the downlink control information comprises 2 bits, and the 2 bits are configured to indicate the association between the uplink PTRS port and the uplink DMRS port.

31. The method according to claim 30, wherein the 8 uplink DMRS ports are divided into two DMRS port groups, each of the DMRS port groups comprising 4 uplink DMRS ports;
a value of the 2 bits is configured to indicate an uplink DMRS port associated with a first uplink PTRS port in a first DMRS port group;
or,
a value of the 2 bits is configured to indicate an uplink DMRS port associated with a second uplink PTRS port in a second DMRS port group.

32. The method according to claim 31, wherein
the uplink PTRS port indicated by the downlink control information is indicated by the network device;
or,
the uplink PTRS port indicated by the downlink control information is defined by a protocol.

33. The method according to claim 32, wherein in a case that the uplink PTRS port indicated by the downlink control information is defined by the protocol:
the downlink control information indicates the first uplink PTRS port or the second uplink PTRS port;
or,
the downlink control information indicates an uplink PTRS port which is preferentially reported by the terminal.

34. The method according to claim 31, wherein in a case that the value of the 2 bits is configured to indicate the uplink DMRS port associated with the first uplink PTRS port in the first DMRS port group,
the uplink DMRS port associated with the second uplink PTRS port is an uplink DMRS port corresponding to a maximum port number in the second DMRS port group;
or,
the uplink DMRS port associated with the second uplink PTRS port is an uplink DMRS port corresponding to a minimum port number in the second DMRS port group;
or,
the uplink DMRS port associated with the second uplink PTRS port is any one uplink DMRS port in the second DMRS port group;
or,
in response to the uplink DMRS port associated with the first uplink PTRS port being a G^{th} uplink DMRS port in the first DMRS port group, the uplink DMRS port associated with the second uplink PTRS port is an H^{th} uplink DMRS port in the second DMRS port group, where H is a remainder of a sum of G and 2 divided by P, P is a minimum number of ports corresponding to the two DMRS port groups, and values of G, H and P are all positive integers not greater than 4.

35. The method according to claim 31, wherein in a case that the value of the 2 bits is configured to indicate the uplink DMRS port associated with the second uplink PTRS port in the second DMRS port group,
the uplink DMRS port associated with the first uplink PTRS port is an uplink DMRS port corresponding to a maximum port number in the first DMRS port group;
or,
the uplink DMRS port associated with the first uplink PTRS port is an uplink DMRS port corresponding to a minimum port number in the first DMRS port group;
or,
the uplink DMRS port associated with the first uplink PTRS port is any one uplink DMRS port in the first DMRS port group;
or,
in response to the uplink DMRS port associated with the second uplink PTRS port being a G^{th} uplink DMRS port in the second DMRS port group, the uplink DMRS port associated with the first uplink PTRS port is an H^{th} uplink DMRS port in the first DMRS port group, where H is a remainder of a sum of G and 2 divided by P, P is a minimum number of ports corresponding to the two DMRS port groups, and values of G, H and P are all positive integers not greater than 4.

36. The method according to claim 22, wherein
in response to the number of the uplink PTRS ports being 2, a codepoint of a first information field in the downlink control information is configured to indicate an uplink DMRS port associated with a first uplink PTRS port in a first association and an uplink DMRS port associated with a second uplink PTRS port in a second association;
wherein the first association refers to an association between the first uplink PTRS port corresponding to the codepoint of the first information field and the uplink DMRS port, and the second association refers to an association between the second uplink PTRS port corresponding to the codepoint of the first information field and the uplink DMRS port.

37. The method according to claim 36, wherein
the first association and the second association are defined by the network device;
or,
the first association and the second association are pre-defined.

38. The method according to claim 36, wherein the first information field comprises n bits, a codepoint of the n bits being configured to indicate 2ⁿ association combinations, each of the association combinations corresponding to one uplink DMRS port associated with the first uplink PTRS port and one uplink DMRS port associated with the second uplink PTRS port, where n is a positive integer.

39. The method according to claim 38, wherein n is obtained from a high-level configuration, or n is obtained by pre-defining.

40. The method according to any one of claims 23 to 39, wherein the first information field is a PTRS-DMRS association field.

41. The method according to any one of claims 22 to 39, wherein the number of uplink PTRS ports is configured by higher layer signaling, and a number of uplink PT-RS ports sent by the terminal is consistent with the configured number of uplink PT-RS ports.

42. The method according to any one of claims 22 to 39, wherein sending the downlink control information to the terminal comprises:
in a scenario of CB-based PUSCH transmission, sending the downlink control information to the terminal;
or,
in a scenario of NCB-based PUSCH transmission, sending the downlink control information to the terminal;
or,
in a scenario of scheduling-free CG PUSCH transmission, sending the downlink control information to the terminal.

43. An apparatus for determining an association of an uplink PTRS port, comprising:
a processing module configured to determine an association between an uplink PTRS port and an uplink DMRS port based on downlink control information;
wherein a maximum number of uplink DMRS ports allocated to a terminal is 8, and a number of uplink PTRS ports comprises 1 or 2.

44. An apparatus for determining an association of an uplink PTRS port, comprising:
a sending module configured to send downlink control information to a terminal, wherein the downlink control information is configured to indicate an association between an uplink PTRS port and an uplink DMRS port;
wherein a maximum number of uplink DMRS ports allocated to a terminal is 8, and a number of uplink PTRS ports comprises 1 or 2.

45. A terminal, comprising:
a processor; and
a transceiver coupled to the processor; wherein
the processor is configured to load and execute executable instructions to implement the method for determining an association of an uplink PTRS port according to any one of claims 1 to 21.

46. A network device, comprising:
a processor; and
a transceiver coupled to the processor; wherein
the processor is configured to load and execute executable instructions to implement the method for determining an association of an uplink PTRS port according to any one of claims 22 to 42.

47. A computer-readable storage medium, having at least one instruction, at least one piece of program, a code set or an instruction set stored thereon, wherein, when the at least one instruction, the at least one piece of program, the code set or the instruction set is loaded and executed by a processor, the method for determining an association of an uplink PTRS port according to any one of claims 1 to 21 or the method for determining an association of an uplink PTRS port according to any one of claims 22 to 42 is implemented.

48. A computer program product, comprising computer instructions stored on a computer-readable storage medium; wherein a processor of a computer device reads the computer instructions from the computer readable storage medium, and executes the computer instructions, causing the computer device to implement the method for determining an association of an uplink PTRS port according to any one of claims 1 to 21 or the method for determining an association of an uplink PTRS port according to any one of claims 22 to 42.
